# EUROPEAN PATENT APPLICATION

(11) **EP 4 772 588 A1**
(43) Date of publication of application: **08.07.2026**
(21) Application number: 25305014.0
(22) Date of filing: 07.01.2025
(51) Int. Cl.: C09J 7/00, C09J 153/02, B32B 27/30, C09J 7/38

(54) **HOT MELT PRESSURE-SENSITIVE ADHESIVE**

(71) Applicant: Bostik SA, 92800 Puteaux (FR)
(72) Inventor: HAO, Juan, SHANGHAI, 201108 (CN); GAO, Ya, SHANGHAI, 201108 (CN)
(74) Representative: Arkema Patent

(57) **Abstract**

The present invention relates to a hot melt pressure sensitive adhesive composition comprising:
- at least one styrenic block polymeric component;
- at least one tackifying resin;
- at least one plasticizer;
- at least one silica;
wherein the content of polycyclic aromatic hydrocarbon is lower than or equal to 200 ppm.

## Description

### TECHNICAL FIELD

The present invention relates to hot melt pressure sensitive adhesive comprising a styrene polymeric component, a plasticizer, a tackifier, and silica.

The present invention also relates to its use for preparing removable label.

### TECHNICAL BACKGROUND

Pressure-sensitive adhesives (PSAs) are substances which give the support layer which is coated therewith an immediate tack at ambient temperature (23°C). This immediate tack enables the instantaneous adhesion of said self-adhesive support to all types of substrates, under the effect of a gentle and brief pressure. PSAs are widely used for the manufacture of self-adhesive labels which are attached to articles (for example packaging) for the purpose of presenting information (such as barcode, name, price) and/or for decorative purposes. PSAs are also employed in the manufacture of self-adhesive tapes of varied uses. Mention may be made, for example, besides the transparent adhesive tape widely used in daily life, of the forming and the assembling of cardboard packagings; the protection of surfaces for painting operations, in the building industry; the maintenance of electric cables in the transportation industry: the adhesive bonding of fitted carpets by double-sided adhesive tapes.

PSAs are generally applied, by continuous coating processes carried out by industrial machines known as "coaters", over the whole of the surface of a large-sized support layer, where appropriate which is printable, in an amount (generally expressed in g/m²) denoted hereinbelow by the term "weight per unit area". The support layer generally consists of paper or of film of a polymeric material having one or more layers. The layer of self-adhesive composition which covers the support layer is itself covered with a protective nonstick layer (often known as a release liner), which often consists of a silicone film. The multilayer system obtained is generally packaged by winding in the form of large reels (or rolls) up to 2 m in width and 1 m in diameter, which can be stored and transported, such packaging often being referred to by the expression "roll stock".

This multilayer system can subsequently be converted into self-adhesive labels which can be applied by a label manufacturer referred to as a "converter", by means of conversion processes which include the printing of desired informative and/or decorative elements onto the printable face of the support layer, followed by cutting to the desired shape and sizes.

The protective nonstick layer can be easily removed without modifying the adhesive layer, which remains attached to the printable support layer. After separation from its nonstick protective layer, the label is applied in general at a temperature close to ambient temperature (23°C) to the article (for example the packaging) to be coated, either manually or with the aid of labelling machines on automated packaging lines.

This multilayer system can also be converted into self-adhesive tapes by cutting and packaging as rolls of predetermined width and length.

Hot-melt adhesives or hot melts (HMs) are substances that are solid at ambient temperature and contain neither water nor solvent. They are applied in the melt state and solidify on cooling, thus forming a joint which, due to its adhesive strength, attaches the substrates to be assembled. Certain hot melts are formulated in such a way as to give the support coated therewith a relatively hard and tack-free character. Other hot melts provide the support with a relatively soft character and a high tack; these are PSAs which are widely used for the manufacture of self-adhesive articles (for example self-adhesive labels). The corresponding adhesives are denoted by the designation "hot-melt pressure-sensitive adhesives" (or HMPSA). HMPSA are thus a different category than hot melt. HM. They therefore also make it possible, owing to their adhesive strength, to firmly attach the label or the tape to the desired substrate, whether it is for example packaging to be labeled or board to be assembled.

Removable labels, also known as eco-friendly labels or N-fold labels, do not leave any marks on substrate when torn off, and the labels are intact and undamaged. Removable label uses removable hot melt pressure sensitive composition as the adhesive. Removable pressure sensitive adhesive differs from permanent pressure sensitive adhesive in that they form a temporary bond and not a permanent bond. Permanent pressure sensitive adhesive will build in peel strength versus time, are generally not required to peel cleanly from the substrate. Removable pressure sensitive adhesive, on the other hand, have a low build up in peel strength versus time, must peel cleanly from the substrate and cannot mare the surface of the substrate. Removable labels are also interesting for reusing or recycling of the packaging/container from which the labels have been removed.

Typical removable labels comprise HMPSAs based on styrene block copolymer, tackifier and naphtenic oils. However, there is a risk of bleeding of oil into substrate. Besides, naphtenic oils comprise polycyclic aromatic hydrocarbon ( PAHs) which is harmful substance, and can be problematic when the removable label is used for food packaging.

There is thus a need for providing hot melt pressure-sensitive adhesives that allows to resolve at least a part of the above-mentioned drawbacks.

More particularly, there is thus a need for hot melt pressure sensitive adhesive suitable for preparing removable label which is easily and efficiently removable from the labelled surface.

There is a need for a hot melt pressure sensitive adhesive exhibiting good peel, and tack, suitable for preparing removable label which does not suffer from oil bleeding on surface.

### DESCRIPTION OF THE INVENTION

### Hot melt pressure sensitive adhesive composition

The present invention relates to a hot melt pressure sensitive adhesive composition comprising:
- at least one styrenic block polymeric component;
- at least one tackifying resin;
- at least one plasticizer;
- at least one silica;
wherein the content of polycyclic aromatic hydrocarbon (PAHs) is lower than or equal to 200 ppm.

### Styrenic block polymeric component

The hot melt pressure sensitive adhesive composition of the invention comprises a styrene block polymeric component. By *"styrene block polymeric component'* is meant a component consisting of at least one SBC (styrene block copolymer) *i.e.* a copolymer comprising at least one styrene block, including styrene triblock copolymers and styrene diblock copolymers.

The styrene block copolymer has at least one A block that includes styrene and at least one B block that includes, e.g., elastomeric conjugated dienes (e.g., hydrogenated and unhydrogenated conjugated dienes), sesquiterpenes (e.g., hydrogenated and nonhydrogenated sesquiterpenes), and combinations thereof. The A blocks and the B blocks bind to one another in any manner of binding such that the resulting copolymer exhibits a variety of structures including, e.g., random, straight-chained, branched, radial, star, comb, tapered, and combinations thereof. The block copolymer can exhibit any form including, e.g., linear A-B block, linear A-B-A block, linear A-(B-A)n-B multi-block, and radial (A-B)n-Y block where Y is a multivalent compound and n is an integer of at least 3, tetrablock copolymer, e.g., A-B-A-B, and pentablock copolymers having a structure of A-B-A-B-A.

Suitable styrene A blocks include, e.g., styrene, alpha-methylstyrene, o-methylstyrene, m-methylstyrene, p-methylstyrene, p-tert-butylstyrene, 2,4-dimethylstyrene, 2,4,6-trimethylstyrene, and combinations thereof.

Suitable block elastomeric conjugated diene B blocks include, e.g., butadiene (e.g., polybutadiene), isoprene (e.g., polyisoprene), 2,3-dimethyl-1,3-butadiene, 1,3-pentadiene, 1,3-hexadiene, and combinations thereof, and hydrogenated versions thereof including, e.g., ethylene, propylene, butylene and combinations thereof.

Suitable B block sesquiterpenes include, e.g., beta farnesene.

The styrene block polymeric component can comprise one or a mixture of styrene block copolymers.

When more than one styrene block copolymer is included the styrene content, the diblock content and the melt flow rate ranges specified for the styrene block polymeric component are a weight average of all the grades present. As an example, if the styrene block polymeric component comprises two styrene block copolymers X and Y. Polymer X is present at 25 weight % (wX) with a styrene content of 15% (sX) and polymer Y is present at 25 weight % (wY) with a styrene content of 20 weight % (sY). The average styrene content of the styrene block polymeric component is calculated in the following way: wX/(wX+wY)* sX + wY/( wX+wY)* sY = 0.5 (15) + 0.5 (20) = 17.5 weight %.

The styrene block polymeric component has preferably an average styrene content of from 10% by weight to 40% by weight, more preferably from 10 % by weight 30% by weight, and even more preferably from 10 % to 20%.

The styrene block polymeric component preferably comprises from 0% by weight to 40%, more preferably from 0% by weight to 30% by weight of diblock.

By *"diblock content"* is meant the weight proportion of diblock copolymers in the styrene block polymeric component.

The styrene block copolymer may be selected from the group consisting of SB, SI, SEB, SEP, SBBS, SBS, SEBS, SEPS, SEEPS, SIBS, SIS, random-block SBR, random-block SIR and mixtures thereof.

More preferably, the styrene block polymeric component comprises at least one SIS copolymer.

By *"SBBS"* is meant a styrene-butadiene-butylene-styrene triblock copolymer. By *"SBS"* is meant a styrene-butadiene-styrene triblock copolymer. By *"SEBS"* is meant a styrene-ethylene-butylene-styrene triblock copolymer. By *"SEPS"* is meant a styrene-ethylene-propylene-styrene triblock copolymer. By *"SEEPS"* is meant a styrene-ethylene-ethylene-propylene-styrene triblock copolymer. By *"SIBS"* is meant a styrene-isoprene-butadiene-styrene triblock copolymer. By "SIS" is meant a styrene-isoprene-styrene triblock copolymer. By *"random-block SBR"* is meant random-block styrene butadiene copolymers (part of the styrene being present as polystyrene blocks). By *"random-block SIR"* is meant random-block isoprene butadiene copolymers (part of the styrene being present as polystyrene blocks). By *"SB"* is meant a styrene-butadiene diblock copolymer. By "*SI*" is meant a styrene-isoprene diblock copolymer. By *"SEB"* is meant a styrene-ethylene-butylene diblock copolymer. By *"SEP"* is meant a styrene-ethylene-propylene diblock copolymer.

More preferably, the styrene block polymeric component comprises:
- at least one linear triblock SIS copolymer, preferably a mixture of two or three linear triblock SIS;
- and optionally at least one diblock SI copolymer.

Useful commercial styrene block copolymers include KRATON D and G ^{®} series from Kraton Polymers, EUROPRENE Sol T ^{®} series from Versalis (Eni group), SOLPRENE ^{®} series from Dynasol Elastomers, SINOPEC ^{®} series from SINOPEC and Taipol ^{®} and Vector^{®} series from TSRC Corporation. Other useful examples include:
- Sinopec^{®} YH-1126, a linear SIS triblock copolymer with a styrene content of 16 %, and a diblock content of 50 %;
- Sinopec^{®} YH-1209, a linear SIS triblock copolymer with a styrene content of 30 %, and a diblock content of less than 1 %;
- Kraton^{®} D1161, a mixture of linear SIS triblock and SI diblock copolymers, with a styrene content of 15 % by weight relative to the total weight of the mixture, an MFI (measured according to ISO1133) of 9 g/10 min at 200°C under a load of 5 kg, an average molecular weight of around 220 000 g/mol, and a SI diblock content of around 19 % by weight relative to the total weight of the mixture.
- Taipol^{®} SBS 4202 from TSRC Corporation, a linear SBS triblock copolymer with a styrene content of 40 % by weight relative to the total weight of the triblock copolymer, an MFI (measured according to ASTM D1238) of 3 to 10 g/10 min at 190°C under a load of 5 kg, an average molecular weight of around 102 400 g/mol.
- Vector^{®} 4411 from TSRC Corporation, a linear SIS triblock copolymer with a styrene content of 44 % by weight relative to the total weight of the triblock copolymer, an MFI (measured according to ASTM D1238) of 40 g/10 min at 200°C under a load of 5 kg, an average molecular weight of around 106 000 g/mol.
   - Europrene^{®} SOL TE9326 (linear SIS triblock copolymer, styrene block content of about 30 %, diblock content of about 15 % from Versalis.

Preferably, the hot melt pressure-sensitive adhesive composition is substantially free of radial styrene block copolymers.

The hot melt pressure-sensitive adhesive composition preferably comprises from 10 % to 60 % by weight of styrene block polymeric component, based on the total weight of the hot melt pressure-sensitive adhesive composition. More preferably, the hot melt pressure-sensitive adhesive composition comprises from 15% to 50 % by weight, even more preferably from 20 % to 40 % by weight, of styrene block polymeric component, based on the total weight of the hot melt pressure-sensitive adhesive composition.

### Tackifying resin

The hot melt pressure sensitive adhesive composition according to the invention comprises at least one tackifying resin.

The at least one tackifying resin may comprise a resin selected from:
- natural and modified rosin, such as gum rosin, wood rosin, tall-oil rosin, distilled rosin, hydrogenated rosin, dimerized rosin, polymerized rosin,
- glycerol and pentaerythritol esters of natural and modified rosins, such as glycerol esters of pale wood rosin, glycerol esters of polymerized rosin, pentaerythritol esters of pale wood rosin, pentaerythritol esters of tall oil rosin, phenolic modified pentaerythritol esters of rosin,
- polyterpene resins, generally resulting from the polymerization of terpene hydrocarbons, such as the monoterpene known as pinene, in the presence of Friedel-Crafts catalysts preferably at moderately low temperatures (e.g. about 20°C-50°C),
- copolymers of terpene with a diene monomer, preferably an aromatic diene monomer such as a styrene monomer (e.g. styrene, methylstyrene, etc),
- phenolic-modified terpene resins, such as those resulting from the condensation, in an acidic medium, of a terpene and a phenol,
- aliphatic petroleum hydrocarbon resins (C5), resulting from the polymerization of C5-hydrocarbon monomers,
- aromatic petroleum hydrocarbon resins (C9), resulting from the polymerization of C9-hydrocarbon monomers,
- petroleum hydrocarbon resins (C5/C9), resulting from the polymerization of a blend of aliphatic C5- and aromatic C9-hydrocarbon monomers,
- dicyclopentadiene petroleum resins (DCPD), resulting from the polymerization of dicyclopentadiene monomers optionally in mixture with aromatic C9-hydrocarbon monomers and/or aliphatic C5-hydrocarbon monomers, in particular aromatic C9-hydrocarbon monomers,
- their corresponding hydrogenated derivatives (resulting from a subsequent total or partial hydrogenation thereof), and
- mixtures thereof.

As examples of C5-hydrocarbon monomers useful to prepare the aliphatic petroleum C5-hydrocarbon resin or the petroleum C5/C9-hydrocarbon resin, mention may be made of trans-1,3-pentadiene, cis-1,3-pentadiene, 2-methyl-2-butene, cyclopentadiene, methylcyclopentadiene and/or cyclopentene.

As examples of C9-hydrocarbon monomers useful to prepare the aromatic petroleum C9-hydrocarbon resin, the petroleum C5/C9-hydrocarbon resin or the DCPD resin, mention may be made of vinyltoluene, indene, methylstyrene, α-methylstyrene, styrene and/or methylindene.

Preferably, the at least one tackifying resin comprises a resin selected from:
- glycerol and pentaerythritol esters of natural and modified rosins,
- aliphatic petroleum hydrocarbon resins (C5), resulting from the polymerization of C5-hydrocarbon monomers,
- aromatic petroleum hydrocarbon resins (C9), resulting from the polymerization of C9-hydrocarbon monomers,
- petroleum hydrocarbon resins (C5/C9), resulting from the polymerization of a blend of aliphatic C5- and aromatic C9-hydrocarbon monomers,
- dicyclopentadiene petroleum resins (DCPD), resulting from the polymerization of dicyclopentadiene monomers optionally in mixture with aromatic C9-hydrocarbon monomers and/or aliphatic C5-hydrocarbon monomers, in particular aromatic C9-hydrocarbon monomers,
- their corresponding hydrogenated derivatives (resulting from a subsequent total or partial hydrogenation thereof), and
- mixtures thereof.

Preferably, the at least one tackifying resin comprises a mixture of:
- i) glycerol esters of natural rosin, pentaerythritol esters of natural rosin, pentaerythritol esters of tall oil rosin, glycerol esters of hydrogenated rosin, glycerol esters of polymerized rosin, pentaerythritol esters of pale wood rosin, pentaerythritol esters of hydrogenated rosin, and phenolic modified pentaerythritol esters of rosin, their corresponding hydrogenated derivatives, and mixtures thereof,
- ii) a resin selected from aliphatic petroleum hydrocarbon resins (C5), aromatic petroleum hydrocarbon resins (C9), petroleum hydrocarbon resins (C5/C9), dicyclopentadiene petroleum resins (DCPD), their corresponding hydrogenated derivatives (total or partial hydrogenation), and mixtures thereof.

Preferably, the weight ratio resin ii) : resin i) ranges from 1 : 0.8 to 1 : 3.

As examples of commercially available tackifier resins i) mention may be made of: Sylvalite^{®} RE 100L commercialized by KRATON which is a pentaerythritol based tall-oil rosin ester, Sylvalite^{®} RE 85L commercialized by KRATON which is a glycerol ester of tall oil rosin, Sylvalite^{™} RE 100S commercialized by Kraton which is pentaerythritol rosin ester of tall oil rosin.

Examples of commercially avaible tackifying resins ii) include Eastotac^{®} H100W (resin C5 fully hydrogenated) from Eastman Chemical Company; Escorez^{®} 2203LC (resin C5/C9) from ExxonMobil Chemical company; Sukorez^{®} SU 120 (resin DCPD fully hydrogenated), Sukorez^{®} SU525 (resin DCPD fully hydrogenated) and Hikorez^{®} H2100 (resin C5 hydrogenated) from Kolon; Regalite^{®} S7125 (resin C9 partially hydrogenated) from Eastman Chemical Company; HS-130 (resin DCPD hydrogenated) from Hanwha Solutions/chemical Corporation; Luhorez HD1120 (resin DCPD hydrogenated) and Luhorez HD1100 (C5 hydrogenated) from Tianjin Luhua Chemical, Eastotac^{®} H100W (resin C5 fully hydrogenated) from Eastman; Regalite^{®} S7125 (C9 partially hydrogenated) from Eastman.

The at least one tackifying resin may have a softening point of at least 80°C, preferably between 80°C and 150°C, more preferably between 90°C and 130°C. The softening point can be measured by a ring and ball method, for example according to ASTM E28.

Unless otherwise stated, standards mentioned throughout the present application are those in effect on the date the application is filed.

The total content of the at least one tackifying resin in the hot-melt composition according to the invention may be comprised between 15 % and 60 % by weight with respect to the total weight of said composition, preferably between 20 % and 50 % by weight, more preferably between 20 % and 40 % by weight.

### Plasticizer

The hot melt pressure sensitive adhesive composition according to the invention comprises a plasticizer.

The plasticizer is preferably selected from the group consisting of paraffinic oils, olefin oligomers, low molecular weight polymers, glycol benzoates, vegetable and animal oils, the derivatives thereof, and their mixtures.

The plasticizer may confer good processability to the hot melt pressure sensitive adhesive composition.

The oligomers may be selected from the group consisting of polypropylene, polybutene, hydrogenated polyisopropene, hydrogenated butadiene, or the like having average molecular weights between about 100 and about 10,000 g/mol.

The vegetable and animal oils may be selected from glycerol esters of fatty acids and polymerization products, and/or derivatives thereof.

Suitable plasticizers for the invention include those commercially available under the tradenames Parol^{®} (paraffinic oil), Kaydol^{®} (paraffinic oil) from Sonneborn, Olympus^{®} L500 from Ergon, Primol^{®} 352 and 382 (paraffinic oils) from Exxon Mobil, Calsol^{®} 5550 from Calumet and Karamay N4010 (paraffinic oils) from Petrochina Karamay Petrochemical Co. LTD.

As examples of olefin oligomers mention may be made of Indopol^{®} H300 (by INEOS), Glissopal^{®} V640 (by BASF), PB1300 (by DAELIM).

Preferably, the plasticizer has a content of polycyclic aromatic hydrocarbon (PAHs) of less than 0.1 mg/kg, preferably less than 0.001 mg/kg, as measured by AfPS GS 2019:01 PAK.

Preferably, the plasticizer has a kinematic viscosity of less than 100 mm²/s at 40°C, as detected by GB/T 265.

Preferably, the cycloalkane content in the plasticizer is less than 10 wt%, preferably less than 5 wt%, more preferably less than 2 wt%, most preferably less than 1 wt%, e.g., 10, 5, 2, 1, 0.5, 0.2, 0.1, 0.05, 0 wt%, based on the total weight of said plasticizer. It may be measured by GC-MS.

Preferably, the plasticizer is selected from paraffinic oils.

The total content of the plasticizer in the hot melt pressure sensitive adhesive composition according to the invention preferably ranges from 10% to 50% by weight, more preferably from 15% to 45% by weight, based on the total weight of the composition.

### Silica

The hot melt pressure sensitive composition comprises silica.

The silica may be selected from fumed silica, precipitated silica, dry silica, and mixtures thereof.

Fumed (pyrogenic) silicas are typically prepared by means of flame hydrolysis or flame oxidation. This involves oxidizing or hydrolysing of hydrolysable or oxidizable starting materials, generally in a hydrogen/oxygen flame. Starting materials used for pyrogenic methods include organic and inorganic substances. Silicon tetrachloride is particularly suitable. As a result of the thermal process used to make fumed silica particles, fumed silica particles are by nature hydrophilic unless specifically treated.

The fumed silica may comprise hydrophobic fumed silica, hydrophilic fumed silica, or a mixture of both.

Hydrophobic fumed silica may be obtained by treating hydrophilic fumed silica with a hydrophobizing agent such as for example organosiloxane. The surface of the silica is chemically modified in the process, i.e. the hydrophobizing agent is connected to the silica by chemical bonds thereby forming a hydrophobic fumed silica.

Preferably, the hydrophobizing agents may be selected from octamethylcyclotetrasiloxane, polydimethylsiloxane, dimethylsiloxane, monomethyltrichlorosilane, dimethyldichlorosilane, trimethylchlorosilane, hexamethyldisilazane, or alkylsilanes such as but not limited to, octyltrialkoxysilanes, hexyltrialkoxysilanes. More preferably, the hydrophobizing agent is selected from octamethylcyclotetrasiloxane, alkylsilanes, dimethyldichlorosilane or hexamethyldisilazane.

Non limitative commercially available examples of hydrophobic fumed silicas include: Aerosil^{®} R202, Aerosil^{®} RY200, Aerosil^{®} RY200S, Aerosil^{®} RY50, Aerosil^{®} NY50, Aerosil^{®} RY200L, Aerosil^{®}RY300 from Evonik industries, Cab-o-sil^{®} CT-1206 or Cab-o-sil^{®} TG-3110 from Cabot Corporation, HDK^{®}-H18, HDK^{®}-H17 from Wacker Chemie AG. Hydrophilic fumed silicas are produced and sold, for example, by Nippon Aerosil Co., Ltd., in trade names of AEROSIL fumed silica, such as AEROSIL 900, AEROSIL 130, AEROSIL 200, AEROSIL 255, AEROSIL 255, AEROSIL OX50, or HDK^{®}-H20 from Wacker Chemie AG.

The precipitated silica is typically an amorphous form of silica which is well known in the art and it is produced by precipitation from a solution containing silicate salts. The precipitated silica is distinct from pyrogenic silica or fumed silica.

Preferably, the silica is precipitated silica.

The silica may have a BET surface area of at least 50 m²/g. Preferably, the silica has a BET surface area of at least 100 m²/g, more preferably from 200 m²/g to 600 m²/g.

The BET surface area may be determined according to standard measuring methods such as ISO 9277.

The silica has a D50 particle size ranging from 1 to 100 microns, preferably from 5 to 50 microns, and even more preferably from 5 to 20 microns.

The D50 particle size is preferably measured by laser diffraction according to ISO 13320-1.

D50 represents the maximum size which 50 percent by volume of the particles have.

The total content of the silica in the hot melt pressure sensitive adhesive composition according to the invention preferably ranges from 1% to 30% by weight, more preferably from 1% to 20% by weight, even more preferably from 2% to 8% by weight based on the total weight of the composition.

In the hot melt pressure sensitive adhesive composition, the weight ratio oil to silica preferably ranges from 1 to 6, more preferably from 2.8 to 4, most preferably from 3 to 4, e.g., 1, 1.5, 2, 2.5, 2.8, 2.9, 3, 3.1, 3.2, 3.3, 3.4, 3.5, 3.6, 3.7, 3.8, 3.9, 4.0, 4.2, 4.5, 4.8, 5, 5.5, 6,.

### Stabilizer

The hot melt pressure sensitive adhesive composition also preferably comprises at least one stabilizer, more preferably at least one antioxidant.

The hot melt pressure sensitive adhesive composition comprises from about 0% to about 5 %, preferably from 0 to about 3 %, more preferably from about 0.1 to about 3 %, more preferably from about 0.1 to 2 %, by weight of a stabilizer, based on the total weight of the hot melt pressure sensitive adhesive composition.

Suitable stabilizers are incorporated to help protect the polymers noted above, and thereby the total adhesive system, from the effects of thermal and oxidative degradation which normally occurs during the manufacture and application of the adhesive composition, as well as in the ordinary exposure of the final product to the ambient environment. Such degradation is usually manifested by deterioration in the appearance, physical properties and performance characteristics of the hot melt adhesive composition.

Among the applicable stabilizers, more particularly antioxidants, mention can be made of high molecular weight hindered phenols and multifunction phenols, such as sulfur and phosphorous-containing phenols. Hindered phenols are well known to those skilled in the art and may be characterized as phenolic compounds that also contain sterically bulky radicals in close proximity to the phenolic hydroxyl group thereof. In particular, tertiary butyl groups generally are substituted onto the benzene ring in at least one of the ortho positions relative to the phenolic hydroxyl group. The presence of these sterically bulky substituted radicals in the vicinity of the hydroxyl group serves to retard its stretching frequency and correspondingly, its reactivity; this steric hindrance thus providing the phenolic compound with its stabilizing properties. Representative hindered phenols include: 1,3,5-trimethyl-2,4,6-tris(3-5-di-tert-butyl-4-hydroxybenzyl) benzene; pentaerythritol tetrakis-3(3,5-di-tert-butyl-4-hydroxyphenyl) propionate; n-octadecyl-3(3,5-di-tert-butyl-4-hydroxyphenyl) propionate, 4.4'-methylenebis(4-methyl-6-tert-butylphenol); 2,6-di-tert-butylphenol; 6-(4-hydroxyphenoxy)-2,4-bis(n-octylthio)-1,3,5-triazine; 2,3,6-tris(4-hydroxy-3,5-di-tert-butyl-phenoxy)-1,3,5-triazine; di-n-octadecyl-3,5-di-tert-butyl-4-hydroxybenzylphosphonate; 2-(n-octyl-thio)ethyl-3,5-di-tert-butyl-4-hydroxybenzoate and sorbitol hexa-3(3,5-di-tert-butyl-4-hydroxy-phenyl)propionate.

The performance of these antioxidants may be further enhanced by utilizing, in conjunction therewith: (1) synergists such as, for example, thiodipropionate esters and phosphites; examples of these include dialuryl thiodipropionate (DLTDP) and tris(nonylphenyl)phosphite (TNPP), respectively; and (2) chelating agents and metal deactivators as, for example, ethylenediaminetetraacitic acid, salts thereof and disalicylalpropylenediimine.

Suitable antioxidants include those commercially available under the tradenames Irganox^{®} 1010 (tetrakis(methylene(3,5-di-ter-butyl-4-hydroxyhydrocinnamate)) methane), Irgafos^{®} 168 (tris(2,4-ditert-butylphenyl)phosphate) and Irganox^{®} PS800 (propanoic acid, 3,3'-thiobis-1,1'-didodecyl ester) from BASF, Chinox^{®} 1010 (pentaerythritol tetrakis(3-(3,5-di-tert-butyl-4-hydroxyphenyl) propionate)) from Shuangjian, Evernox^{®} 1010 and Everfos^{®} 168 from Everspring Chemical, Songnox^{®} 10 and 1680 from Songwon.

### Other additives

The hot melt pressure sensitive adhesive composition may further comprise at least one other additive, preferably in an amount of from 0 to 5 %, for example from 0.1 to 5 %, by weight, by total weight of the adhesive composition.

The additives may be selected from the group consisting of inert colorants (e.g. titanium dioxide), fillers different from silica (e.g. talc, calcium carbonate, clay, mica, wollastonite, feldspar, aluminum silicate, alumina, hydrated alumina, glass microspheres, ceramic microspheres, thermoplastic microspheres and mixtures thereof), surfactants, crosslinking agents, nucleating agents, reactive compounds, fire-retardant mineral or organic agents, ultraviolet (UV) or/and infrared (IR) light absorbing agents, UV or/and IR fluorescing agents, and mixtures thereof. These optional other additives are well known in this art.

### Hot melt pressure sensitive adhesive

The content of polycyclic aromatic hydrocarbon (PAHs) in the hot melt pressure sensitive adhesive composition is lower than or equal to 200 ppm. Preferably, the content of polycyclic aromatic hydrocarbon (PAHs) is less than 100 ppm, more preferably less than 50 ppm, even more preferably 0 ppm.

The content of PAHs is typically measured by GC-MS.

As used herein, the term "ppm" are party per million by weight.

Preferably, the hot met pressure sensitive adhesive composition is free of naphtenic oils.

Preferably, the hot melt pressure sensitive adhesive composition does not comprise terpene-based resin.

In the hot melt pressure sensitive adhesive composition, the weight ratio styrene block polymeric component: plasticizer preferably ranges from 0,8 to 3, more preferably from 1 to 2, e.g., 0.8, 0.9, 1, 1.2, 1.4, 1.6, 1.8, 2, 2.2, 2.4, 2.6, 2.8, 3.

In the hot melt pressure sensitive adhesive composition, the weight ratio tackifier : plasticizer preferably ranges from 0,8 to 3, more preferably from 1 to 2, e.g., 0.8, 0.9, 1, 1.2, 1.4, 1.6, 1.8, 2, 2.2, 2.4, 2.6, 2.8, 3.

Tack refers to an adhesive's holding power (adhesion) upon contact with a substrate. An adhesive with high initial tack will grab the substrate quickly. An adhesive with low initial tack will exhibit a low level of adhesion when applied.

The hot-melt pressure sensitive adhesive composition according to the invention has preferably a loop tack greater than or equal to 5 N/cm² in particular on Stainless steel surface. The loop tack can be measured as described in FINAT Test Method No. 9, for example as described in Experimental part.

Peel adhesion refers to a measure of the adhesive's ability to wet out a surface of a substrate and subsequently adhere to the substrate. Peel adhesion thus may quantify the permanence of the adhesion or peel ability of the adhesive. Peel adhesion is defined as the force required to remove adhesive coated material from a standard test plate after a certain dwell time at an angle of 180 degrees and specified speed. Peel adhesion thus refers to final adhesion. Peel adhesion may be measured according to FINAT Test Method No. 1.

The hot melt pressure sensitive adhesive composition has preferably a peel strength after 20 min greater than or equal to 2 N/25mm, and more preferably greater or equal to 4 N/25mm on stainless steel.

The hot melt pressure sensitive adhesive composition has preferably a peel strength after 20 min greater than or equal to 1 N/25 mm, more preferably greater than or equal to 2 N/25mm, on carboard.

The hot melt pressure sensitive adhesive advantageously allows preparing removable labels which exhibit low (or even no) oil bleeding on the surface adhered to.

The hot melt pressure sensitive adhesive advantageously meets the standard (EU) No 10/2011 which is a regulation developed by the EU for plastic materials and products in food contact materials, aimed at ensuring the safety of these materials, preventing harmful substances from migrating into food, and protecting consumer health.

The hot melt pressure-sensitive adhesive composition preferably has a Brookfield viscosity at 163°C lower than or equal to 20 000 mPa.s, even more preferably higher than or equal to 10 000 mPa.s. The Brookfield viscosity may be measured according to the standard method ASTM D-3236, using a Brookfield viscometer of the type Spindle 21, at a temperature of about 163°C.

Preferably, the hot melt pressure sensitive adhesive composition comprises:
- from 10% to 60% by weight of at least one styrenic block polymeric component, said styrenic block polymeric component comprising at least one linear triblock SIS copolymer and optionally at least one deblock SI copolymer;
- from 15% to 60% by weight of at least one tackifying resin, said tackifying resin comprising a mixture of:
   ∘ i) glycerol esters of natural rosin, pentaerythritol esters of natural rosin, pentaerythritol esters of tall oil rosin, glycerol esters of hydrogenated rosin, glycerol esters of polymerized rosin, pentaerythritol esters of pale wood rosin, pentaerythritol esters of hydrogenated rosin, and phenolic modified pentaerythritol esters of rosin, their corresponding hydrogenated derivatives, and mixtures thereof,
   ∘ ii) a resin selected from aliphatic petroleum hydrocarbon resins (C5), aromatic petroleum hydrocarbon resins (C9), petroleum hydrocarbon resins (C5/C9), dicyclopentadiene petroleum resins (DCPD), their corresponding hydrogenated derivatives (total or partial hydrogenation), and mixtures thereof;
- from 10% to 50% by weight of at least one plasticizer;
- from 1% to 30% by weight at least one silica;
wherein the content of polycyclic aromatic hydrocarbon is lower than or equal to 200 ppm the weight % being based on the total weight of said composition.

More preferably, the hot melt pressure sensitive adhesive composition comprises:
- from 20% to 40% by weight of at least one styrenic block polymeric component, said styrenic block polymeric component comprising at least one linear triblock SIS copolymer and optionally at least one deblock SI copolymer;
- from 20% to 40% by weight of at least one tackifying resin, said tackifying resin comprising a mixture of:
   ∘ i) glycerol esters of natural rosin, pentaerythritol esters of natural rosin, pentaerythritol esters of tall oil rosin, glycerol esters of hydrogenated rosin, glycerol esters of polymerized rosin, pentaerythritol esters of pale wood rosin, pentaerythritol esters of hydrogenated rosin, and phenolic modified pentaerythritol esters of rosin, their corresponding hydrogenated derivatives, and mixtures thereof,
   ∘ ii) a resin selected from aliphatic petroleum hydrocarbon resins (C5), aromatic petroleum hydrocarbon resins (C9), petroleum hydrocarbon resins (C5/C9), dicyclopentadiene petroleum resins (DCPD), their corresponding hydrogenated derivatives (total or partial hydrogenation), and mixtures thereof;
- from 15% to 45% by weight of at least one plasticizer;
- from 2% to 8% by weight at least one silica;
wherein the content of polycyclic aromatic hydrocarbon is lower than or equal to 200 ppm, the weight % being based on the total weight of said composition.

The composition of the present invention may be prepared by mixing the ingredients at a temperature from 100 to 200°C until reaching a homogeneous mixture.

### Uses

The invention also relates to the use of the hot melt pressure-sensitive adhesive composition as described above, for bonding two substrates.

The present invention also concerns a multilayer system comprising:
- an adhesive layer (A) consisting of the HMPSA composition as disclosed herein;
- a support layer (B) adjacent to the adhesive layer (A); and
- a nonstick protective layer (C), adjacent to the adhesive layer (A).

### Adhesive layer (A):

The thickness of the adhesive layer (A) is preferably strictly greater than 10 µm, more preferably within a range of from 11 to 100 µm, more preferentially from 12 to 35 µm.

### Support layer (B):

The support layer (B) included in the multilayer system according to the invention is adjacent to the adhesive layer (A).

Layer (B) preferably consists of paper or of a film comprising one or more homogeneous layers of a polymer.

Among the suitable polymers, mention may be made of polyolefins, such as polyethylene, including high-density polyethylene, low-density polyethylene, linear low-density polyethylene and linear ultra-low-density polyethylene; polypropylene and polybutylenes; polystyrene; natural or synthetic rubber; vinyl copolymers, such as polyvinyl chloride, which may or may not be plasticized, and poly(vinyl acetate); olefinic copolymers, such as ethylene/methacrylate copolymers, ethylene/vinyl acetate copolymers, acrylonitrile/butadiene/styrene copolymers, and ethylene/propylene copolymers; acrylic polymers and copolymers; polyurethanes; polyethers; polyesters; and mixtures thereof.

Preferably, the support layer (B) is based on acrylic polymers, on polyethylene (PE), polypropylene (PP), which is oriented, non-oriented or biaxially oriented, polyimide, polyurethane, or polyester, such as polyethylene terephthalate (PET).

The support layer (B) may be a printable support layer.

### Nonstick protective layer (C):

The protective nonstick layer (C) can be easily removed without modifying the layer (A), which remains attached to the support layer (B).

According to a preferred embodiment, said layer (C) comprises a silicone-based material, said material either constituting said layer (C), or being present in the form of a surface coating of said layer (C), said coating being intended to be in contact with the adhesive layer (A).

According to a preferred embodiment of the multilayer system according to the invention, said system is packaged in the form of a winding around a reel (or roll), the dimensions of which can vary within a wide range. Thus, the diameter of such a roll may range from 0.25 to 1 m, and its width from 0.25 to 2 m.

According to this preferred embodiment, the protective nonstick layer (C) consists of the support layer (B) included in the multilayer system, wherein the face which is opposite the face in contact with the adhesive layer (A) is coated with a silicone-based material. Such a multilayer system in which the protective nonstick layer (C) is not distinct from the layer (B) is sometimes denoted by the name "linerless". Said packaging is particularly advantageous, because of its simplicity and the resulting economy, for converters who convert these roll stocks into final self-adhesive articles, such as labels or self-adhesive tapes.

The HMPSA composition is in particular applied in the melt state at a temperature above 130°C on the support layer (B) in an amount which is strictly greater than 10 g/m² and which generally ranges from 11 to 100 g/m², preferably from 11 to 35 g/m², to form the adhesive layer (A).

The application is carried out by known coating techniques such as for example lipped-nozzle coating (at a temperature of around 160°C to 180°C) or curtain coating (at a temperature of around 120°C to 180°C). The HMPSA is generally applied by a lipped nozzle onto the nonstick protective layer (C), the assembly then being laminated to the support layer (B) (transfer coating). The application of the HMPSA by curtain coating may be carried out directly on the support layer (B), depending on the coating temperature.

The present invention also relates to the use of the multilayer system as defined above for the manufacture of self-adhesive articles, such as self-adhesive labels and adhesive tapes.

Another subject of the invention is a self-adhesive label capable of being obtained by conversion of the multilayer system described above. In this case, a printable support layer (B) is preferred.

The conversion process carried out generally includes:
- a step of printing onto the printable support layer (B), then
- a step of cutting the multilayer system so as to reduce the width thereof, and therefore to repackage it on a reel of smaller width; then
- a step (termed "stripping") of obtaining a multilayer system, packaged on the reel of the preceding step, wherein the unchanged nonstick protective layer (C) is bonded just to the part of the printed support layer that corresponds to the shape and dimensions of the self-adhesive label designed for its final use. This step therefore consists in selectively cutting it and then removing the undesirable part of the printable support layer (B) and of the adhesive layer (A), said part often being termed the "backbone of the label".

The latter multilayer system is employed on lines for packaging articles to be labeled, such as, for example, packages, by means of automated systems which separate the self-adhesive labels from the protective layer, and attach them to the articles to be labeled. The labeled article is preferably a package or container consisting of:
- glass;
- a usual plastic material chosen from polyethylene terephthalate (PET), polyvinyl chloride (PVC), polyethylene (PE), in particular high-density polyethylene (HDPE), or else polypropylene (PP); or
- cardboard, such as for example the cardboard known under the name FIPAGO cardboard (name originating from the Fédération Internationale des fabricants de PApiers GOmmés (International Federation of the Manufacturers of Gummed Papers), of Kraftliner grade and weight per unit area 200 g/m².

The present invention also relates to a self-adhesive removable label comprising the hot melt pressure sensitive composition as defined above.

The present invention also relates to an article containing the self-adhesive removable label.

The self adhesive removable labels may be used in wide variety of labelling applications and end-use areas, such as labelling of food, home and personal care products, industrial products, pharmaceutical and health care products, beverage and wine bottles, other consumables, logistic products etc. The surface of the labelled article may be for example plastic, glass, metal, or paper based. The labelled article may be for example a container, such as a bottle, jar, canister, can, tin or the like. The label may also be applied to semi-rigid or flexible packages used for e.g. packaging of food or for logistics, such as cardboard box or envelope. Examples of containers include glass bottles, metal bottles, polyethylene terephthalate (PET) bottles, and bottles made of polyolefin, such as high density polyethylene (HDPE) and polypropylene (PP). The label may surround the labelled article, such as a bottle, completely or partially. Labels enable providing information, such as product specification, on the labelled product(s). Information, e.g. print of a label, may comprise human-readable information, like image(s), logo(s), text, and/or machine readable information, like bar code(s), QR (Quick Response) code(s).

The preferred embodiments for each ingredient can be combined with each other, and also with preferred embodiments relative to the hot melt pressure sensitive adhesive as such, and its uses, without needed to detail all possible combinations.

The ranges disclosed in this description include both the lower and the upper limit thereof. For example, the expressions "ranging from x to y" or "between x and y" comprises the limits x and y.

The following examples illustrate the invention without limiting it.

### Examples

Material used in the examples:

| **Raw material** | **Supplier** | |
|---|---|---|
| Sinopec^{®}1126 | Sinopec | a SIS with a styrene block content of about 16 %, and a diblock content of about 50% |
| Sinopec^{®}1105 | Sinopec | a SIS with 15% of styrene and a diblock content of < 1% |
| vector 4113 | TSRC | a SIS with a styrene block content of 15% and a diblock content of 18% |
| SYLVALITE RE 100L | Kraton | pentaerythritol based tall-oil rosin ester, tackifier |
| LUHOREZ HD1100 | Luhua | C5 hydrogenated hydrocarbon resin, tackifier |
| HAITACK JH3200 | Ningbo Jinhai Chenguang Chemical Corporation | C5/C9 hydrocarbon resin, tackifier |
| GA-100DG | Arakawa | Pentaerythritol rosin ester, tackifier |
| Primol^{®}352 | Exonmobil | Paraffin oil |
| Irganox^{®} 1010 | BASF | pentaerythritol tetrakis[3-(3,5-di-tert-butyl-4-hydroxyphenyl)propionate] (CAS: 6683-19-8), antioxidant |
| Sipernat^{®}500LS | Evonik | Silica having a D50 of 10.5µ |
| | | |

### Test methods:

### Viscosity

The viscosity was measured according to ASTM D3236-15 by a Brookfield DV2T viscometer using 21# spindle. The viscosity was recorded after 15 min at setting temperature accordingly.

### Softening point:

The Ring and Ball softening point, measured by ASTM E28-2022 with an automated Herzog unit.

### Adhesive strength: peel test

The adhesive strength of the compositions is evaluated by the 180° peel test on a plate of a certain substrate, as described in the FINAT test method No. 1, published in the FINAT Technical Handbook, 6th edition, 2001. FINAT is the International Federation of Self-Adhesive Label Manufacturers and Converters.

The principle of this test is as follows: A support layer consisting of a 50 µm thick PET film is precoated with the HMPSA in an amount of 20 g/m².

A test specimen in the form of a rectangular strip (25.4 mm x 175 mm) is cut from the self-adhesive support thus obtained. This test specimen is fastened to a plate consisting of a certain substrate. The assembly obtained is left at 23°C for 20 minutes. It is then introduced into a tensile testing device capable of performing the peeling or detachment of the strip at an angle of 180° and with a separation speed of 300 mm per minute. The device measures the force required to detach the strip under these conditions.

The result is expressed in N/25 mm and is indicated, along with the nature of the substrate of the plate, in table below.

### Immediate tack: loop tack test

The immediate tack of the compositions is evaluated by the loop tack test described in FINAT test method No. 9.

A support layer consisting of a 50 µm thick PET film is precoated with the HMPSA in an amount of 20 g/m² so as to obtain a rectangular strip of 25.4 mm by 175 mm. The two ends of this strip are joined together so as to form a loop, the adhesive layer of which is facing outward. The two joined ends are placed in the movable jaw of a tensile testing device capable of imposing a rate of displacement of 300 mm/minute along a vertical axis with the possibility of back-and-forth motion. The lower part of the loop placed in the vertical position is first brought into contact with a horizontal plate of a certain substrate of 25 mm by 30 mm over a square area measuring about 25 mm per side. Once this contact has been established, the direction of displacement of the jaw is reversed. The immediate tack is the maximum value of the force required for the loop to become completely detached from the substrate plate.

The result is expressed in N/25 mm and is indicated, along with the nature of the substrate of the plate, in table below.

### Removable test

A disc cutter (weighing 10 square centimeters) was used to make circular samples with a diameter of 35mm. The samples were attached to glass and corrugated paper, and left at 23°C for 7 days to observe whether there is any residual glue on the surface of the object being pasted.

### Oil bleeding test

A support layer consisting of a 65 µm thick coated paper was precoated with the HMPSA in an amount of 20 g/m² so as to obtain a rectangular strip of 45 mm by 150 mm. The sample was clamped in a 2 kg glass plate, placed in a 75 °C oven for aging for two days. BYK spectrophotometer was then used to measure Delta E. Delta E<2 indicates qualified oil leakage performance.

### Content of polycyclic aromatic hydrocarbon (ppm)

### Detected through GCMS

### Example 1: preparations of the compositions

The compositions of the following table were prepared as follows:
(1) Oil and antioxidant were added to a stainless steel reactor and the temperature was raised to 160 °C;
(2) Then SIS copolymers were added, and it was stirred continuously for 2 hours until the entire system was completely melted;
(3) After the entire system is completely melted, tackifiers were added and the mixture was stirred for 1 hour. Then silica was added, and the mixture was stirred for 1.5 hours, vacuumed for 30 minutes, discharged, and cooled to obtain the hot melt pressure sensitive adhesive composition.

| | Compositions | E1 | E2 | E3 | E4 | E5 | E6 | E7 | E8 |
|---|---|---|---|---|---|---|---|---|---|
| Oil | Primol^{®}352 | 28 | 28 | 28 | 28 | 28 | 28 | 28 | 28 |
| SIS polymer | Sinopec^{®}1126 | 15 | 15 | 15 | 15 | 15 | 15 | 12 | 12 |
| | Sinopec^{®}1105 | 10 | 10 | 10 | 10 | 10 | 10 | 10 | 10 |
| | Vector 4113 | 8 | 8 | 8 | 8 | 8 | 8 | 8 | 8 |
| Resin / tackifier | HAITACK JH3200 | 14.3 | 31.6 | 16.8 | - | 15.8 | 15.8 | 18.8 | 15.8 |
| | LUHOREZ HD1100 | - | - | - | 31.6 | - | - | - | - |
| | SYLVALITE RE 100L | 14.3 | - | 16.8 | - | 15.8 | - | - | - |
| | GA-100DG | - | - | - | - | - | 15.8 | 15.8 | 18.8 |
| Silica | 500LS | 10 | 7 | 5 | 7 | 7 | 7 | 7 | 7 |
| Antioxidant | 1010 | 0.4 | 0.4 | 0.4 | 0.4 | 0.4 | 0.4 | 0.4 | 0.4 |
| Oil:silica ratio | | 2.8 | 4 | 5.6 | 4 | 4 | 4 | 4 | 4 |
| | Total | 100 | 100 | 100 | 100 | 100 | 100 | 100 | 100 |
| | | | | | | | | | |
| Softening Point | | 100.5 | 100.5 | 100.5 | 100.5 | 101 | 101 | 103 | 102.5 |
| content of polycyclic aromatic hydrocarbon (ppm) | | 0 | 0 | 0 | 0 | 0 | 0 | 0 | 0 |
| Viscosity | 163°C /10rpm | 14350 | 13780 | 12650 | 12030 | 12450 | 13540 | 14020 | 14030 |
| | | | | | | | | | |
| 180peel-20 min | On SUS | 3.0 | 2.8 | 2.9 | 2.4 | 3.6 | 4.0 | 4.1 | 4.5 |
| 180peel-20min | On cardboard | 2.1 | 2.0 | 2.0 | 1.5 | 2.2 | 2.2 | 2.3 | 2.5 |
| 180peel-24h | On cardboard | 2.2 | 2.1 | 2.1 | 1.7 | 2.1 | 2.2 | 2.3 | 2.4 |
| loop tack | On SUS | 6.8 | 5.8 | 6.2 | 5.9 | 6.9 | 7.0 | 7.1 | 7.2 |
| Removable test (peel off the surface of the sticker without any residue) | On cardboard | 7D | 7D | 7D | 7D | 7D | 7D | 7D | 7D |
| | On Glass | 7D | 7D | 7D | 7D | 7D | 7D | 7D | 7D |
| Oil bleeding test | 75°C 2days | 0.81 | 0.83 | 1.23 | 0.83 | 0.83 | 0.83 | 0.83 | 0.83 |

| | | | | | | | | | |
|---|---|---|---|---|---|---|---|---|---|
| *The units for peel and loop tack are both N*/*25 mm* *SUS : stainless steel test plate* | | | | | | | | | |

All compositions E1 to E8 are according to the invention. The compositions E1 to E8 advantageously exhibit a peel strength after 20 min greater than or equal to 2 N/25mm. Compositions E5 to E8 exhibit more preferably a peel strength after 20 min greater or equal to 4 N/25mm on stainless steel.

The composition E1 to E8 exhibit also advantageously a peel strength after 20 min greater than or equal to 1 N/25 mm, more preferably greater than or equal to 2 N/25mm, on carboard.

The hot melt pressure sensitive adhesive advantageously allows preparing removable labels which exhibit low (or even no) oil bleeding on the surface adhered to (delta E < 2 after ageing at 75°C for 2 days).

All compositions E1 to E8 meet the standard (EU) No 10/2011 due to the absence of detection of PAHs.

## Claims

1. Hot melt pressure sensitive adhesive composition comprising:
- at least one styrenic block polymeric component;
- at least one tackifying resin;
- at least one plasticizer;
- at least one silica;
wherein the content of polycyclic aromatic hydrocarbon is lower than or equal to 200 ppm.

2. Hot melt pressure sensitive adhesive composition according to claim 1, wherein the styrene block polymeric component has an average styrene content of from 10% by weight to 40% by weight, preferably from 10 % by weight 30% by weight, and more preferably from 10 % to 20%.

3. Hot melt pressure sensitive adhesive composition according to any one of claim 1 or 2, wherein the styrene block polymeric component comprises from 0% by weight to 40%, more preferably from 0% by weight to 30% by weight of diblock.

4. Hot melt pressure sensitive adhesive composition according to any one of claims 1 to 3, wherein the styrene block polymeric component comprises:
- at least one linear triblock SIS copolymer, preferably a mixture of two or three linear triblock SIS;
- and optionally at least one diblock SI copolymer.

5. Hot melt pressure sensitive adhesive composition according to any one of claims 1 to 4, wherein said composition comprises from 10 % to 60 % by weight of styrene block polymeric component, based on the total weight of the hot melt pressure-sensitive adhesive composition.

6. Hot melt pressure sensitive adhesive composition according to any one of claims 1 to 5, wherein the at least one tackifying resin comprises a resin selected from:
- glycerol and pentaerythritol esters of natural and modified rosins,
- aliphatic petroleum hydrocarbon resins (C5), resulting from the polymerization of C5-hydrocarbon monomers,
- aromatic petroleum hydrocarbon resins (C9), resulting from the polymerization of C9-hydrocarbon monomers,
- petroleum hydrocarbon resins (C5/C9), resulting from the polymerization of a blend of aliphatic C5- and aromatic C9-hydrocarbon monomers,
- dicyclopentadiene petroleum resins (DCPD), resulting from the polymerization of dicyclopentadiene monomers optionally in mixture with aromatic C9-hydrocarbon monomers and/or aliphatic C5-hydrocarbon monomers, in particular aromatic C9-hydrocarbon monomers,
- their corresponding hydrogenated derivatives (resulting from a subsequent total or partial hydrogenation thereof), and
- mixtures thereof.

7. Hot melt pressure sensitive adhesive composition according to any one of claims 1 to 6, wherein the at least one tackifying resin comprises a mixture of:
- i) glycerol esters of natural rosin, pentaerythritol esters of natural rosin, pentaerythritol esters of tall oil rosin, glycerol esters of hydrogenated rosin, glycerol esters of polymerized rosin, pentaerythritol esters of pale wood rosin, pentaerythritol esters of hydrogenated rosin, and phenolic modified pentaerythritol esters of rosin, their corresponding hydrogenated derivatives, and mixtures thereof,
- ii) a resin selected from aliphatic petroleum hydrocarbon resins (C5), aromatic petroleum hydrocarbon resins (C9), petroleum hydrocarbon resins (C5/C9), dicyclopentadiene petroleum resins (DCPD), their corresponding hydrogenated derivatives (total or partial hydrogenation), and mixtures thereof;
wherein the weight ratio resin ii) : resin i) preferably ranges from 1 : 0.8 to 1 : 3.

8. Hot melt pressure sensitive adhesive composition according to any one of claims 1 to 7, wherein the total content of the at least one tackifying resin is comprised between 15 % and 60 % by weight with respect to the total weight of said composition, preferably between 20 % and 50 % by weight, more preferably between 20 % and 40 % by weight.

9. Hot melt pressure sensitive adhesive composition according to any one of claims 1 to 8, wherein the plasticizer has a content of polycyclic aromatic hydrocarbon (PAHs) of less than 0.1 mg/kg, preferably less than 0.001 mg/kg, as measured by AfPS GS 2019:01 PAK.

10. Hot melt pressure sensitive adhesive composition according to any one of claims 1 to 9, wherein the cycloalkane content in the plasticizer is less than 10 wt%, preferably less than 1 wt% based on the total weight of said plasticizer.

11. Hot melt pressure sensitive adhesive composition according to any one of claims 1 to 10, wherein the plasticizer is selected from paraffinic oils.

12. Hot melt pressure sensitive adhesive composition according to any one of claims 1 to 11, wherein the total content of the plasticizer ranges from 10% to 50% by weight, more preferably from 15% to 45% by weight, based on the total weight of the composition.

13. Hot melt pressure sensitive adhesive composition according to any one of claims 1 to 12, wherein the silica is precipitated silica.

14. Hot melt pressure sensitive adhesive composition according to any one of claims 1 to 13, wherein the silica has a D50 particle size ranging from 1 to 100 microns, preferably from 5 to 50 microns, and even more preferably from 5 to 20 microns.

15. Hot melt pressure sensitive adhesive composition according to any one of claims 1 to 14, wherein the total content of the silica ranges from 1% to 30% by weight, more preferably from 1% to 20% by weight, even more preferably from 2% to 10% by weight based on the total weight of the composition.

16. Hot melt pressure sensitive adhesive composition according to any one of claims 1 to 15, wherein the weight ratio oil to silica ranges from 1 to 6, preferably from 2.8 to 4.

17. Multilayer system comprising:
- an adhesive layer (A) consisting of the composition according to any one of claims 1 to 16;
- a support layer (B) adjacent to the adhesive layer (A); and
- a nonstick protective layer (C), adjacent to the adhesive layer (A).

18. Self-adhesive removable label comprising the hot melt pressure sensitive composition according to any one of claims 1 to 16, or the comprising the multilayer system according to claim 17.

19. Article containing the self-adhesive removable label according to claim 18.
